**Europäisches Patentamt**

**European Patent Office**

**Office européen des brevets**

(19)

(11) **EP 1 111 483 A1**

(12) **EUROPEAN PATENT APPLICATION**
published in accordance with Art. 158(3) EPC

(43) Date of publication:
27.06.2001 Bulletin 2001/26

(51) Int Cl.⁷: **G05B 19/02**

(21) Application number: 99925309.9

(86) International application number:
**PCT/JP99/03146**

(22) Date of filing: 14.06.1999

(87) International publication number:
**WO 00/02106 (13.01.2000 Gazette 2000/02)**

(84) Designated Contracting States:
**DE FR GB**

(30) Priority: 06.07.1998 JP 19081598

(71) Applicant: **TOYOTA JIDOSHA KABUSHIKI KAISHA**
**Aichi-ken 471-8571 (JP)**

(72) Inventor: **Adachi, Noriyasu**
**Toyota-shi, Aichi-ken 471-8571 (JP)**

(74) Representative:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(54) **METHOD AND APPARATUS FOR ASSISTING DEVELOPMENT OF PROGRAM FOR VEHICLE**

(57)     The man-hour required to develop a vehicle control program is reduced. A program generator (1) automatically generates a vehicle C code from control specifications inputted in the form of a data flowchart and in the form of a state flow chart. The vehicle C code is downloaded in a vehicle ECU (2). The control of a controlled system, which is a vehicle model device (3), by the vehicle ECU (2) is monitored by the program generator (1) and debugging is performed. Since the vehicle C code automatically generated from control specifications is used, the debugging is easy and reliable. Manual coding is obviated. Integer information is added to a symbol block of a data flowchart, and therefore a vehicle C code of integer logic can be automatically generated using the integer information.

**Fig. 1**

## Description

TECHNICAL FIELD

The present invention relates to a method and apparatus for assisting development of a vehicle-use program, and in particular to an apparatus and method which improves development efficiency and reliability of a developed program.

BACKGROUND ART

Tools for integrated environment utilizing visual programming technique have been developed for facilitating control system design. Computer software for simulation and programming functions is now commonly used to develop vehicle control systems.

When a computer operator working on system development inputs specification data into his computer, using a simulation function, a specification incorporating the concepts input by the user is shown on a computer display in the form of a data or state flowchart. Simulations are then executed according to the charts prepared, and the logic is debugged with reference to the simulation result.

Such simulation software has a function of automatic generation of a program code, such as C language code, based on a chart prepared. C language code prepared in this manner is, however, generally lengthy with many steps and thus not suitable for use intact in vehicle control, which requires severe restrictions on memory and an execution speed. Moreover, such C code is very unfriendly because computer-determined variable names are attached to parts in the charts.

The situation being such, many users choose to manually generate vehicle-use C code suitable for vehicle electric control units (vehicle ECU) while referring to the data and state flowcharts. In particular, dedicated codes having integer logic are generated. These codes differ from general C codes and enable high speed processing using a smaller memory in view of data bit number. This manually generated vehicle-use C code is downloaded to a vehicle-mounted ECU, and debugged.

Conventionally, as described above, the specification simulation process and the program coding process are separate, and each requires a debug operation. Therefore, should a problem be found when debugging vehicle-use code, it is difficult to ascertain whether the problem originated from erroneous coding or an improper original specification. Due to the difficulty in coding and debugging operation, the number of process steps necessary to ensure control program reliability is increased, which in turn prolongs the development period and increases development costs.

The present invention was conceived in light of the above, and aims to provide a method and apparatus for assisting vehicle-use program development to develop highly reliable programs in a shorter period.

DISCLOSURE OF INVENTION

In order to achieve the above objects, according to the present invention, there is provided a method for assisting vehicle program development. In this method, a vehicle control program is generated using a program generator having a function of generating a vehicle-use code from a control specification input. The generated vehicle control program is downloaded to a vehicle ECU, which in turn executes the vehicle control program for debugging the vehicle control program.

As described above, according to the present invention, a vehicle-use code is generated directly from a control specification, and downloaded to a vehicle ECU. Because the original control specification is in common with the vehicle-use code, bugs are less likely to occur. Therefore, efficient debug operation can be achieved for smaller labor. Moreover, in the person hours required for coding operation can be significantly reduced.

Debug operation at the debug step is preferably performed in a program generator which inspects a result of execution of the vehicle control program by the vehicle ECU. Use of a program generator having a control specification can facilitate a debut operation.

According to another aspect of the present invention, there is provided an apparatus for assisting vehicle program development, comprising a chart generation function of generating a data flowchart and a state flowchart indicative of a vehicle control specification, and a program code generation function of generating, based on the generated charts, a vehicle-use code for a vehicle control program having an integer logic to be processed by a vehicle ECU. Use of integer logic in the vehicle ECU is preferred because of the limitation of a memory size and an execution speed. In this embodiment, automatic generation of vehicle-use codes are achieved through generation of integer logic codes based on data and state flowcharts.

According to yet another aspect of the present invention, a simulation function is provided for simulating the data flowchart with application of a floating point numbers corresponding to a physical value, and of an integer obtained by converting a floating point number, to output the simulation results. While conventionally a floating point number is handled at a simulation stage, while an integer is handled at a coding stage, according to the present invention, a floating point number and an integer are both handled at a simulation stage, and results of processing with the both are output. With this arrangement, acceptability of integer logic can be easily judged at the specification generation stage. Preferably, a result of back calculation to obtain a floating point number from a result of simulation with an integer applied thereto may be displayed so that a difference between results of simulations with a floating point number applied thereto and of an integer applied thereto, respectively, can be determined.

Further, a block symbol in the data flowchart has information on a floating point number, an integer, an integer conversion condition from a floating point number to an integer, and a result of back calculation to obtain an integer from a floating point number using the integer conversion condition. Vehicle-use codes are automatically generated utilizing integer information of the block symbol.

According to still another aspect of the present invention, a priority function is provided for defining an order to execute a plurality of data flowcharts in the same hierarchy in the state flowchart. With this function, an efficient and appropriate control program can be reliably generated.

According to still another aspect of the present invention, a labeling function is provided to assign a desired label to a selected symbol connection line in a data flowchart, and a vehicle-use code is generated in which the label is used as a variable name for the part to which the label is attached. When the attached label which is easily understandable for a user, a readable vehicle-use code can be generated.

According to yet another aspect of the present invention, a grouping function is provided for grouping, in vehicle-use code generation, a plurality of processes corresponding to a plurality of block symbols in the data flowchart. Preferably, grouping is carried out according to a predetermined grouping restriction condition which defines the number of block symbols to be grouped. Further preferably, a part with a label attached thereto, of a symbol connection line is set as a grouping break. With grouping, readability of a vehicle-use code can be improved.

Vehicle-use code of the present invention can be readily embodied as C language code having been modified so as to suit to a vehicle ECU, but is not limited to C code. A vehicle ECU of the present invention is a desirable ECU to be mounted to a vehicle, such as an engine ECU, a transmission ECU, a suspension control ECU, and a break control ECU. It is needless to say that control specification and vehicle specification which are necessary in program development may be different depending on an ECU and vehicle-mounted devices to be controlled.

BRIEF DESCRIPTION OF DRAWINGS

Fig. 1 is a diagram showing a complete structure of a preferred embodiment of the present invention;
Fig. 2 is a block diagram showing a structure of a program generator;
Fig. 3 is a data flowchart and a state flowchart indicative of control specification;
Fig. 4 is a diagram illustrating concept of integer logic for a vehicle ECU;
Fig. 5 is a diagram showing an example of a part of integer logic;
Fig. 6 is a diagram showing structure of an integer block;
Fig. 7 is a diagram showing an example of an integer block applied to multiplication;
Fig. 8 is a diagram describing multiplication block processing of Fig. 7;
Fig. 9 is a diagram showing a modified example of the process of Fig. 8;
Fig. 10 is a diagram showing a support tool for integer logic;
Fig. 11 is a diagram showing a support tool for integer logic;
Fig. 12 is a diagram showing a support tool for integer logic;
Fig. 13 is a diagram showing a support tool for integer logic;
Fig. 14 is a diagram showing a support tool for integer logic;
Fig. 15 is a diagram showing a support tool for integer logic;
Fig. 16 is a diagram showing a support tool for integer logic;
Fig. 17 is a diagram describing a method for determining an operation order;
Fig. 18 is a diagram showing a priority function for defining an operation order in the embodiment;

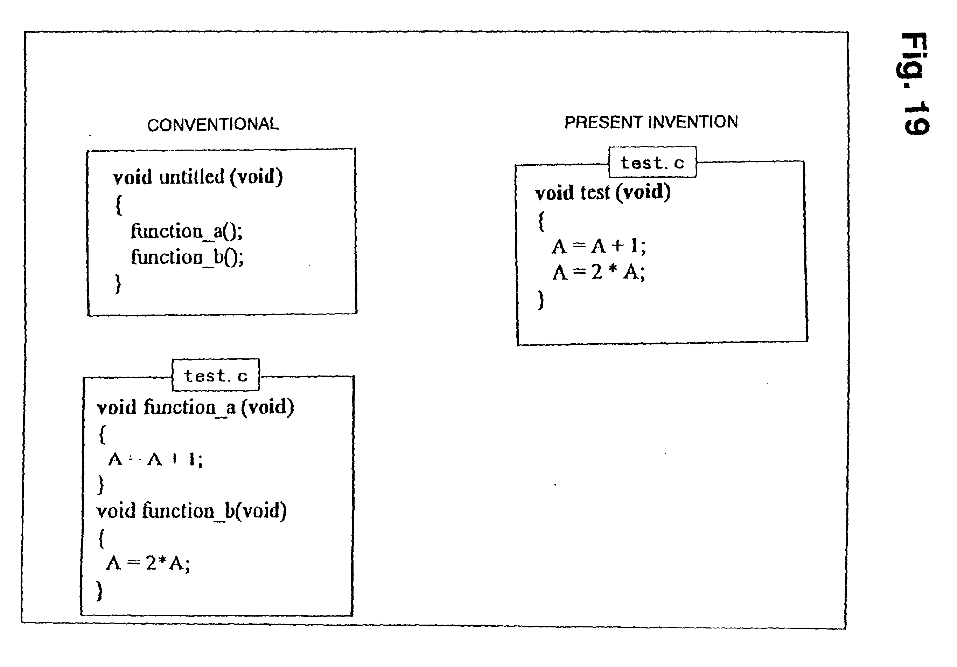

Fig. 19 is a diagram showing C code resulting from the process of Figs. 17 and 18;
Fig. 20 is a diagram showing example C code generated based on a data flowchart;
Fig. 21 is a diagram showing a C code generated based on the same data flowchart as that in Fig. 20, and given labeling in the embodiment;
Fig. 22 is a diagram showing grouping process in C code generation;
Fig. 23 is a diagram showing variable name data base and expression database which are generated in C code generation;
Fig. 24 is a diagram showing grouping process utilizing the database of Fig. 23;
Fig. 25 is a diagram showing an example of grouping process; and
Fig. 26 is a diagram showing an example of a display screen when the program generator monitors engine control.

BEST MODE FOR CARRYING OUT THE INVENTION

In the following, a preferred embodiment of the present invention will be described with reference to the accompanying drawings.

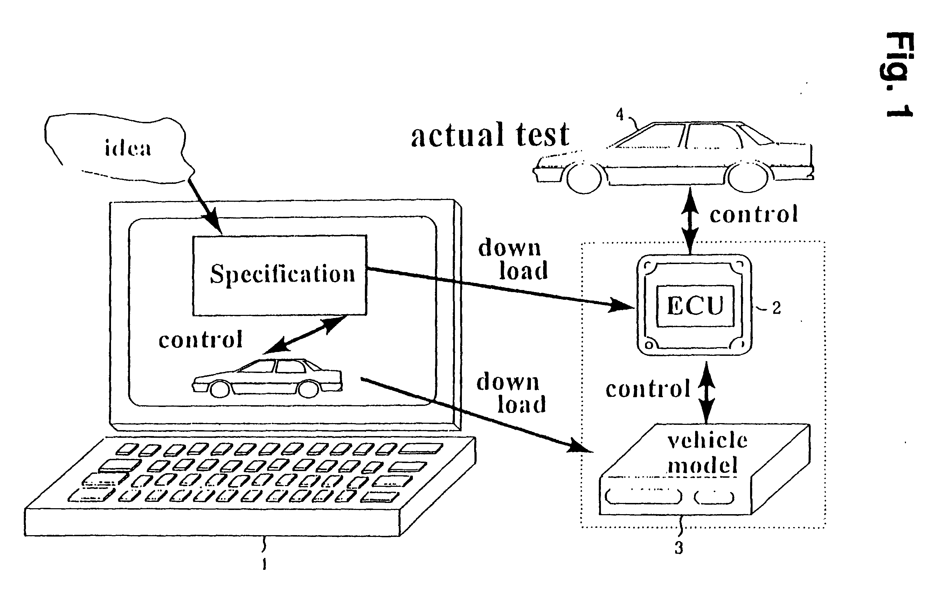

Referring to Fig. 1, a program generator 1 has functions of generating and simulating a control specification, and for generating vehicle-use C code from the generated control specification.

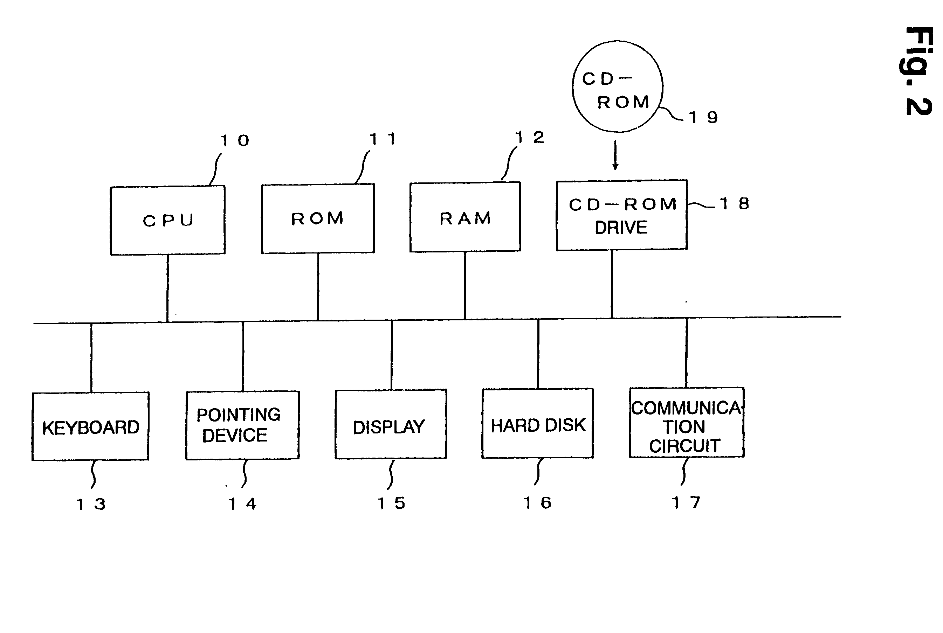

The program generator 1 comprises a computer, having, as shown in Fig. 2, a CPU 10, a ROM 11, a RAM 12, a keyboard 13, a pointing device 14, a display 15, a hard disk 16, a communication circuit 17, and a CD-ROM drive 18. A program for achieving the respective functions of the program generator 1 is stored in either the ROM 11, the hard disk 16, or the CD-ROM 19, and executed by the CPU 10. An input/output device is not limited to a keyboard 13, a pointing device 14, and a display 15. Any type of memory device other than a CD-ROM 19, such as DVD, may be used. Any type of memory device other than a hard disk 16 may be used.

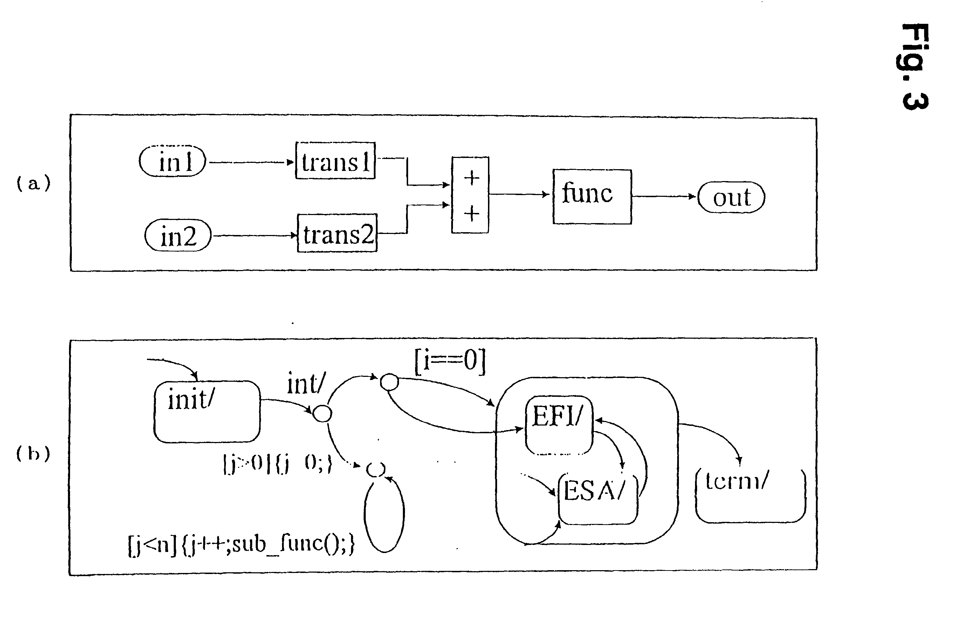

The user writes a specification incorporating his idea on the display 15 by operating the keyboard 13 and the pointing device 14 (a mouse and so on), and thereupon the control specification is shown on the display 15 in the form of a data flowchart (a block diagram) and a state flowchart (a state transition chart, a state transition diagram), as shown in Figs. 3(a), 3(b), a data flowchart showing a partial data flow, a state flowchart showing an entire control flow.

The user also inputs a vehicle specification by operating the keyboard 13 and the pointing device 14 so that a hypothetical vehicle model is formed in the program generator 1. Specifically, a vehicle model is formed as a collection of expressions which describe various vehicle motions and operations, and so on.

In response to the user's instructions, the generated specification (data and state flowcharts) is simulated. Specifically, as shown in Fig. 1, the vehicle model is controlled on the computer according to the control specification logic. When a simulation result is shown on the display 15, necessary debugging is applied. In a debug operation, the specification is modified and improved for completion.

When the specification completes, vehicle-use C code is generated based on the complete specification in response to the user's instruction. Specifically, a file containing code written in the C language and corresponding to the data and state flowcharts is formed. A vehicle-use C code has an integer logic and a structure enabling higher speed processing using a smaller memory in size, compared to general C code (described below). A resultant vehicle-use C code is downloaded to an actual vehicle ECU 2, e.g., an engine ECU.

The vehicle model is input from the program generator 1 to the vehicle model device 3. The vehicle model device 3, including a DSP, simulates high speed interruption and other characteristics of the vehicle ECU 2. Conducting such a simulation before testing using an actual vehicle reduces development period and results in a more effective product. After the vehicle model device 3 is connected to the vehicle ECU 2, the vehicle-use C code, having been loaded into the ECU 2, is executed to begin simulation in a near-real environment. Operation of the vehicle ECU 2 and vehicle model device 3 are monitored by the program generator 1 via the communication circuit 17, and a debug operation is applied in the program generator 1. For example, should improper control operation be found, the cause thereof is detected using the data and state flowcharts. Then, improper points are amended in the computer, and the amended logic is verified.

After debugging is completed, the vehicle ECU 2 is mounted to a vehicle 4 for actual testing. In actual testing, any defect in need of amendment due to a non-linearity factor and so on of an actual vehicle is detected for final program amendment.

In the following, a program generator 1 will be described in more detail.

Control Specification Input/Generation Function (Integer Logic)

Conventionally, at a control specification input stage, a chart is prepared for processing a floating point number indicative intact of a physical value. Next, a simulation is carried out using the floating point number, so that acceptability of the control specification can be determined based on the simulation result. Therefore, C code which is automatically generated from the chart using a conventional function contains a floating point number.

Here, vehicle control requires making best use of the capacity of the CPU of an ECU in view of minimizing costs and increasing processing speed. This demand is particularly significant in control of devices with high speed rotation, such as an engine. In order to meet such a demand, preferably, integer logic (a fixed point number) is applied to C code for a vehicle-use ECU to generate C code with a data bit of a different number from that of general C code. This is a significant difference between vehicle-use C code and automatically generated general C code, and a major reason for forcing manual generation of vehicle-use C code.

In this embodiment, an integer block (described later) is introduced so that integer logic can be taken into consideration as early as at a control specification input stage, and whereby vehicle-use C codes having an integer logic can be automatically generated from a control specification.

(1) Conversion from Floating Point Number to Integer

A floating point number is converted into an integer, following the below expression (1).

$$x\_int=int(x\_float-OFFSET)/SLOPE \qquad (1)$$

wherein x_float is a floating point number, x_int is an integer, OFFSET (or bias) and SLOPE (or LSB) are integer conversion condition.

(2) Summary of Integer Logic

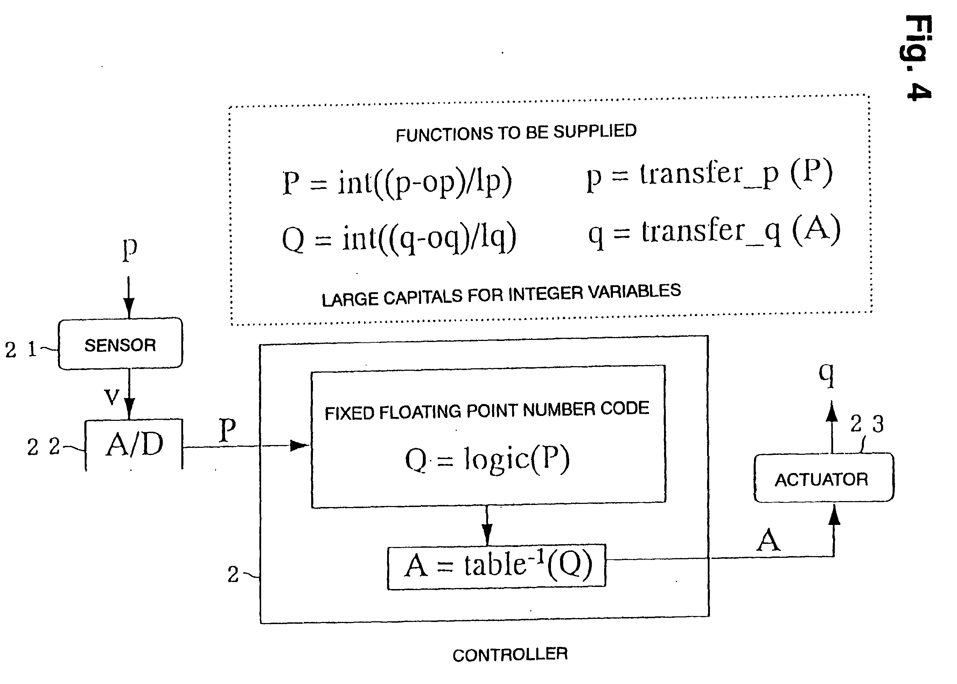

Fig. 4 illustrates the concept of integer logic in a vehicle ECU. The sensor 21 sends a voltage signal v according to a detected physical quantity p to an A/D converter 22. The A/D converter 22 converts the received voltage signal v into integer data P to send to the vehicle ECU 2. Using integer logic, the vehicle ECU 2 obtains integer data Q for a control parameter from the integer data P of a detection signal. Integer data may be, e.g., an unsigned integer of 16 bits. The integer data Q is converted into a control signal to be output to an actuator 23, or an object to be controlled, for generation of physical quantity q.

In Fig. 4, the integer logic must produce a result equivalent to that which would be produced according to the original control logic with respect to a physical value. SLOPE, OFFSET at the input/output portion of the vehicle ECU 2 are lp, lq, op, oq, respectively. In actuality, integer logic includes a plurality of operation process stages, and has many SLOPEs, OFFSETS in an intermediate process. These SLOPEs, OPPSETs should be set such that the integer logic is optimized in view of a memory size and an execution time.

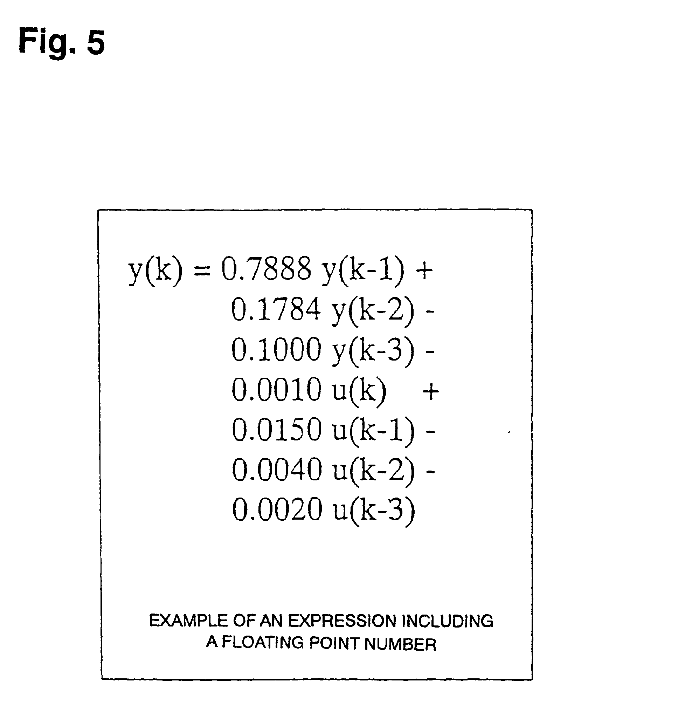

In a case wherein a control specification (logic) generated by a user includes a transfer function, as shown in Fig. 5, and identical SLOPE is used for all seven items of the transfer function in constituting an integer logic, the seventh item may be always caused zero when SLOPE which is suitable for the first item is applied to all seven items because factors differ significantly between the first and seventh items.

Generally, too small a SLOPE may cause overflow, while too large a SLOPE may result in negligence of an input of a sensor. Further, setting an improper SLOPE may result in a control logic containing a lengthy component. In order to avoid these problems, readily setting of a suitable integer conversion condition is desired.

(3) Integer Block

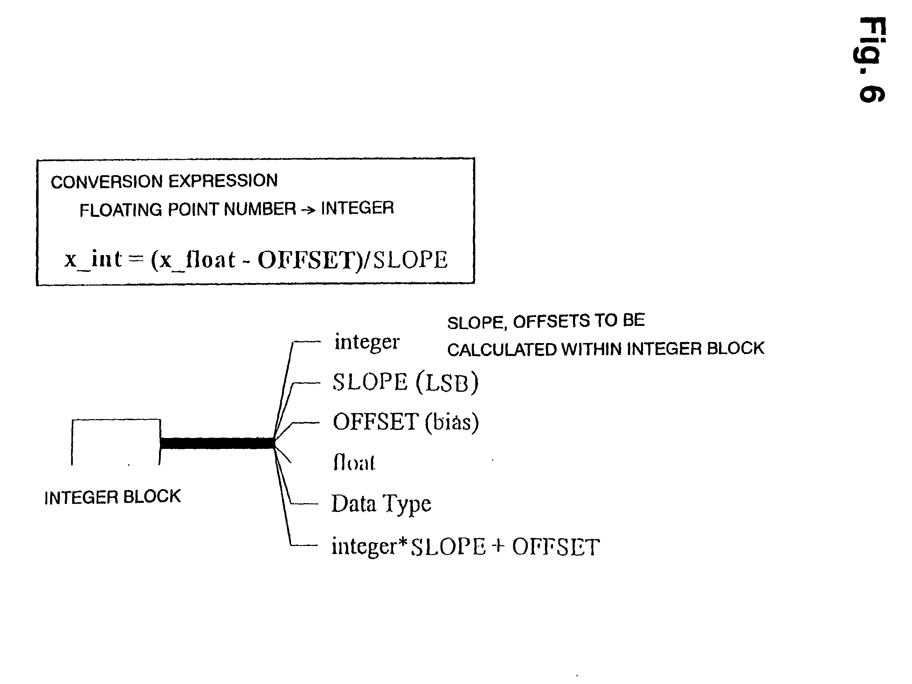

In order to generate a suitable integer logic in a data flowchart so that suitable integer conversion condition can be readily set, an integer block, shown in Fig. 6, is introduced in this embodiment. An integer block is a block symbol used in a data flowchart, which a user can write into a data flowchart.

As shown in Fig. 6, an integer block includes six types of information pieces, namely (1) integer, (2) SLOPE (LSB), (3) OFFSET (bias), (4) float (a floating point value), (5) Data Type, (6) "integer $*$ SLOPE + OFFSET" . (6) is a back float, or a result of back calculation to obtain a float from an integer.

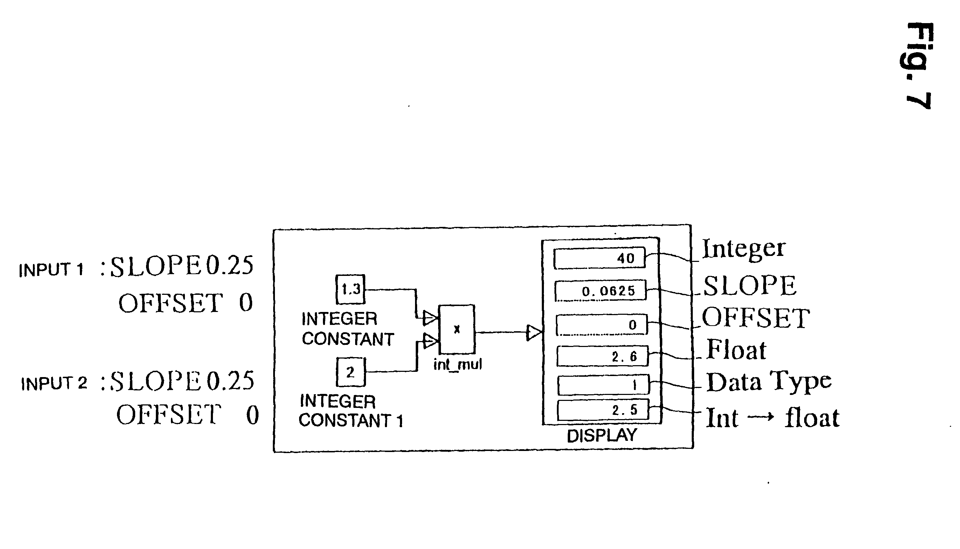

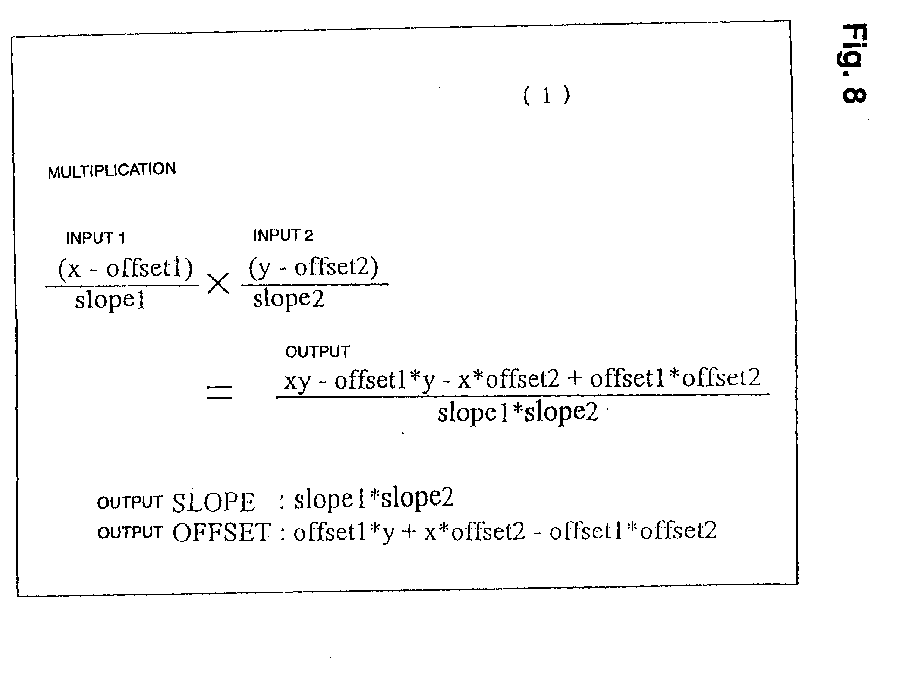

Function of an integer block will be described referring to Figs. 7 and 8 and using multiplication as an example.

In the data flowchart of Fig. 7, input data 1, 2, and SLOPE and OFFSET for each data are input to a multiplication block. The multiplication block obtains the above mentioned six types of data items from these inputs, and outputs them.

Fig. 8 shows an expression describing a process in a multiplication block. In this process, input values x, y are converted into integers using offsets 1, 2, and slopes 1, 2, respectively, and a product of the two integers is output (integer output). Meanwhile, a float output is "xy". Comparison between expression (1) and "xy" leads to SLOPE and OFFSET on the output side (Fig. 8, expressions (2), (3)). Further, a back float (=integer $*$ $SLOPE_{OUT}$ + $OFFSET_{OUT}$) is also output.

The user can ascertain the simulation result by referring to the display in Fig. 7. "Float" indicates whether or not basic control logic is correct. Further, "float" and "back float" are compared. When the difference (0.1) is within a tolerable range, it is known that integer logic is appropriate. On the other hand, when the difference is not within the tolerable range, it is known that inappropriate integer logic, or integer conversion condition, namely "slopes 1, 2", is set. Then, "slopes 1, 2" are repeatedly adjusted until an appropriate result is obtained.

Figs. 7 and 8 show only a part of a control specification. In actuality, control specification constitutes of a series of numerous connected blocks. In this embodiment, "SLOPE" can be verified and adjusted in each block in a control process. For example, when a significant difference is found between "float" and "integer" in a certain block, integer conversion condition is adjusted in any block preceding the focused block.

With the above arrangement, "float" and "integer" can have substantially equivalent meaning over the entire control process. In other words, a situation with a difference between "float" and "integer" becoming larger as it goes to latter blocks, can be avoided. Also, a situation in which input of a certain sensor is ignored because of an improper SLOPE set, can be avoided.

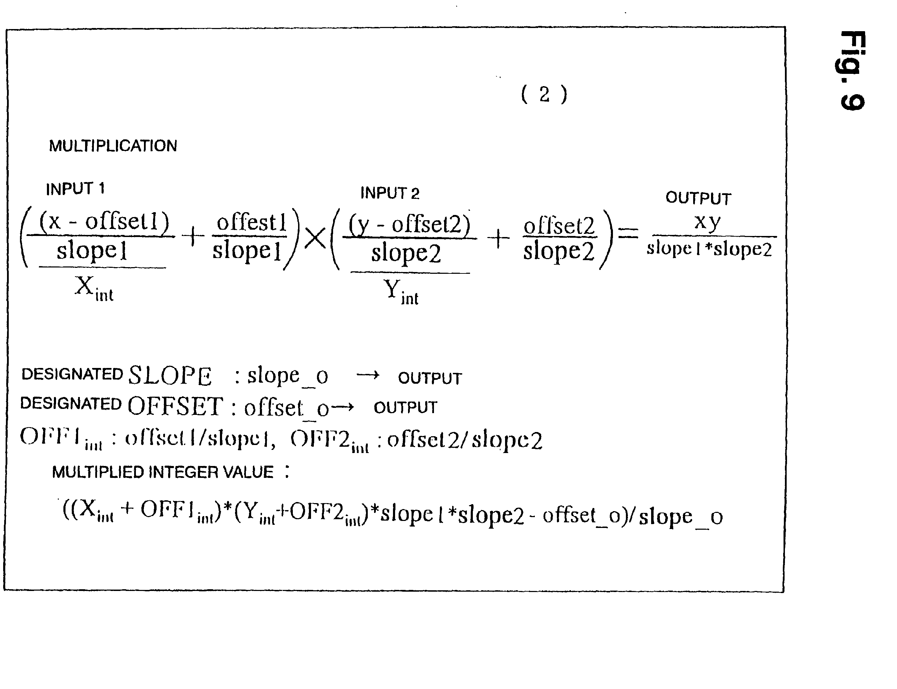

As shown in the third expression in Fig. 8, OFFSET on an output side includes input values x, y. When the influence thereof is not negligible, the user can chose modified process, as shown in Fig. 9. Specifically, "offset/slope" is added to an integer prior to the multiplication whereby the item for "offset" on the output side becomes zero, as is shown in the first expression in Fig. 9.

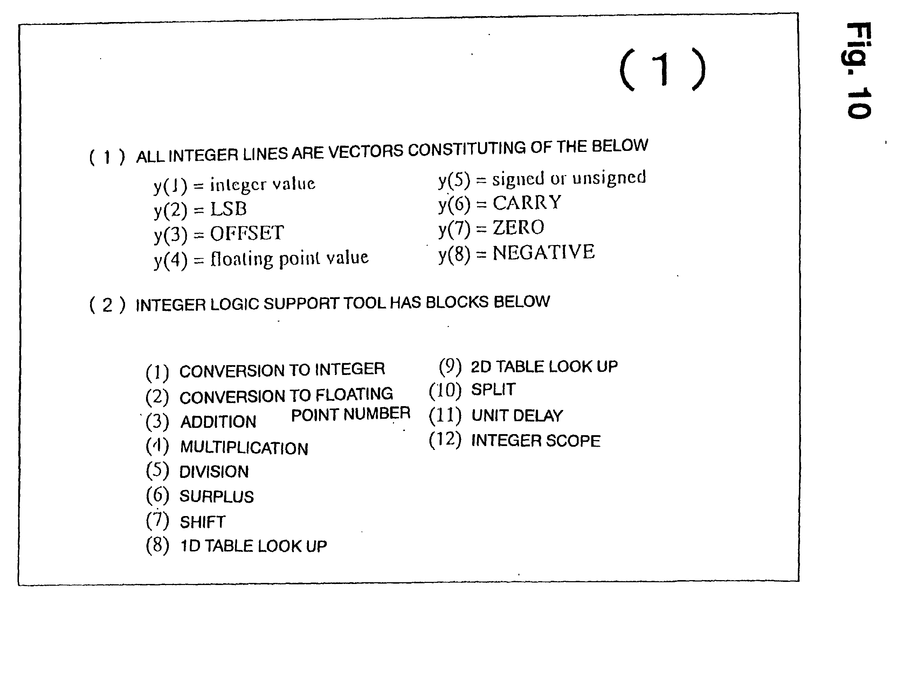

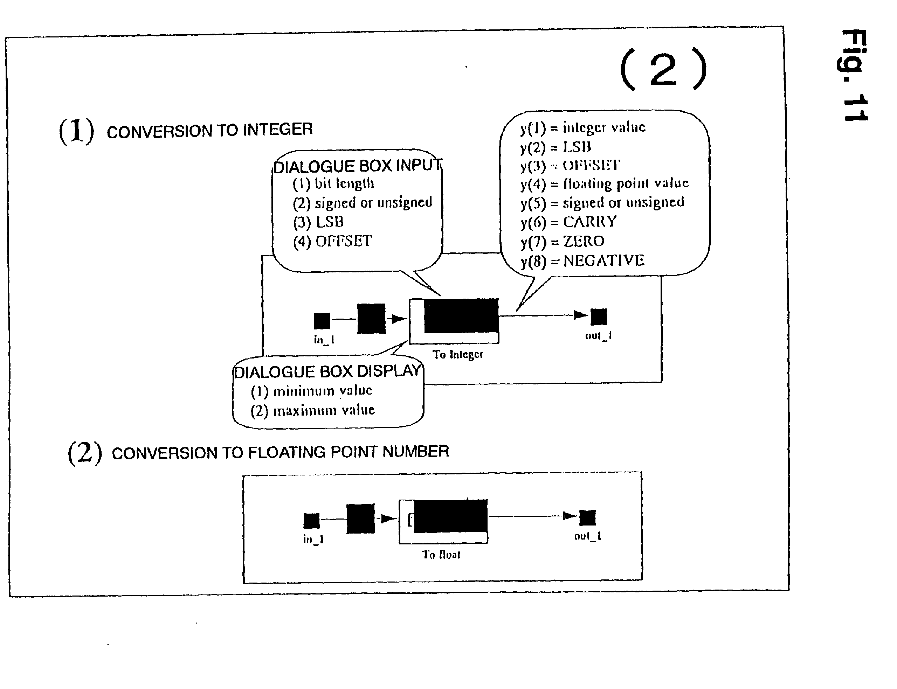

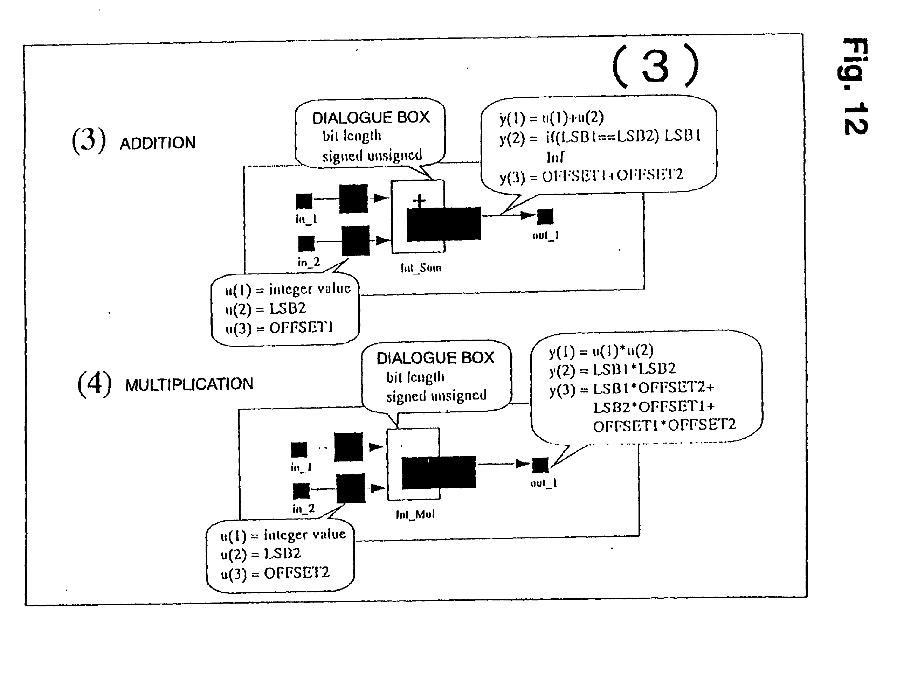

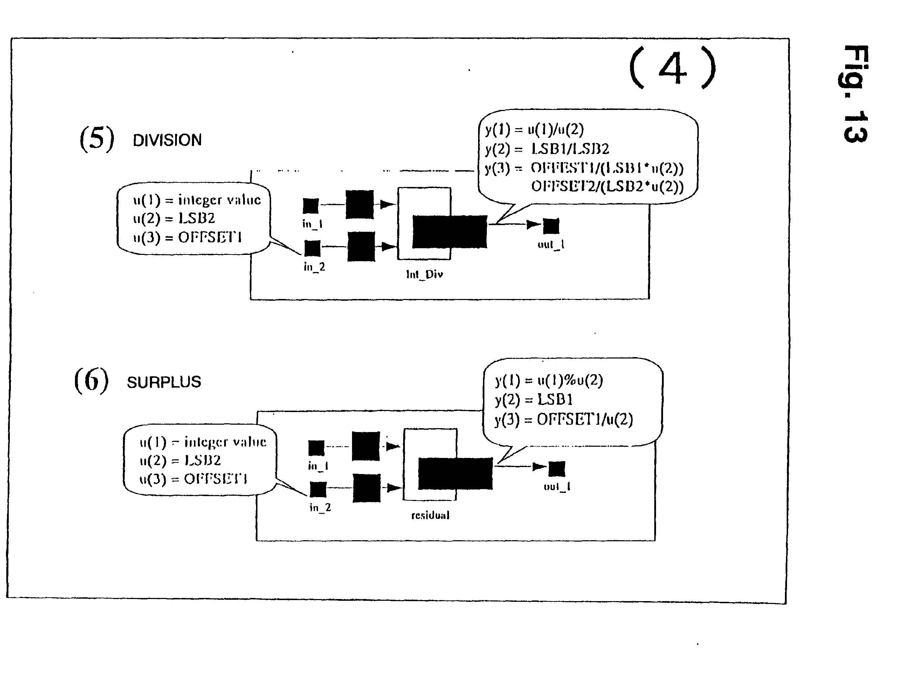

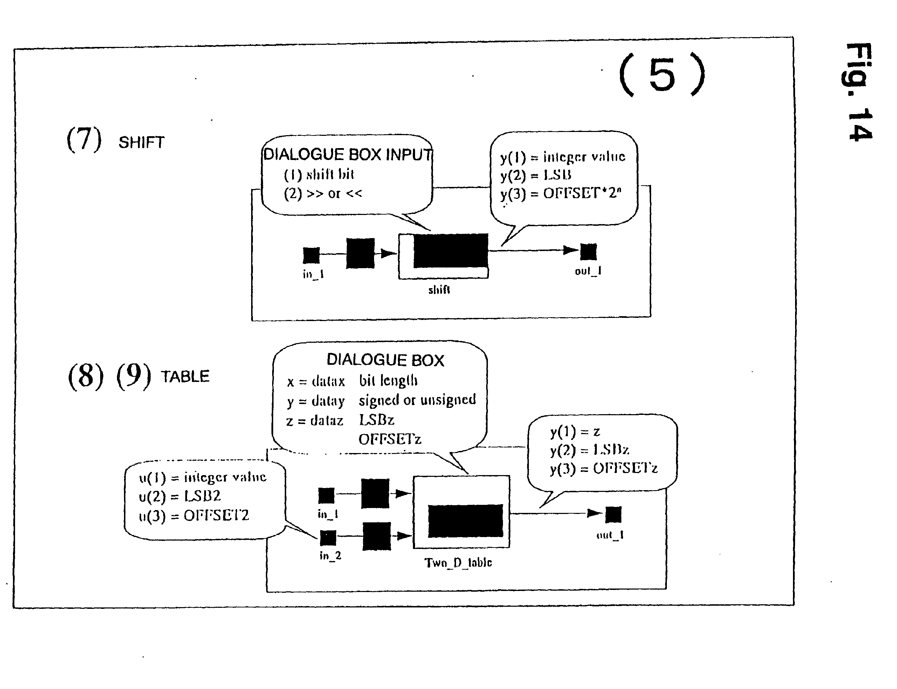

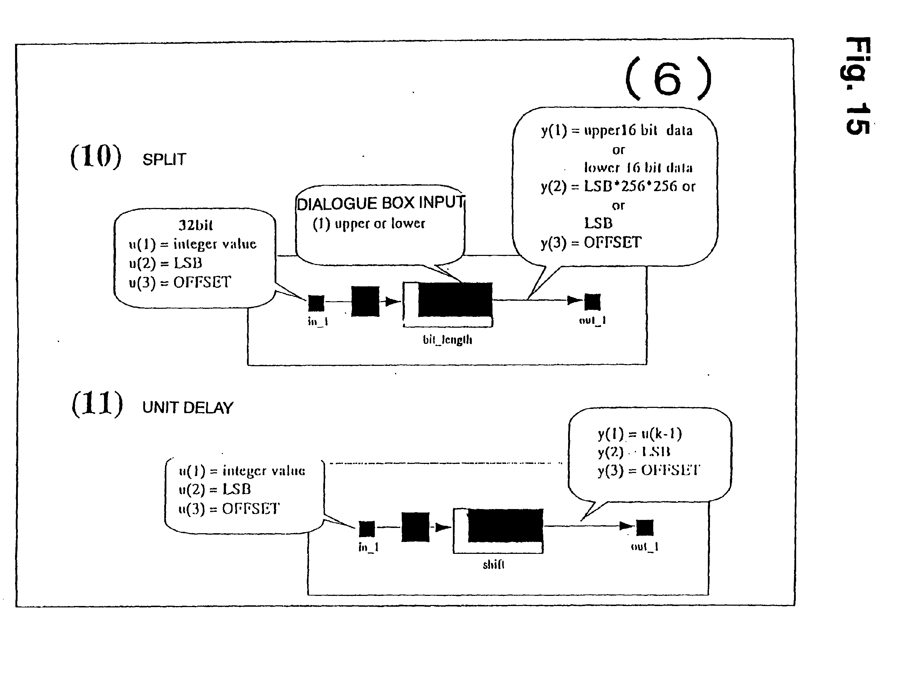

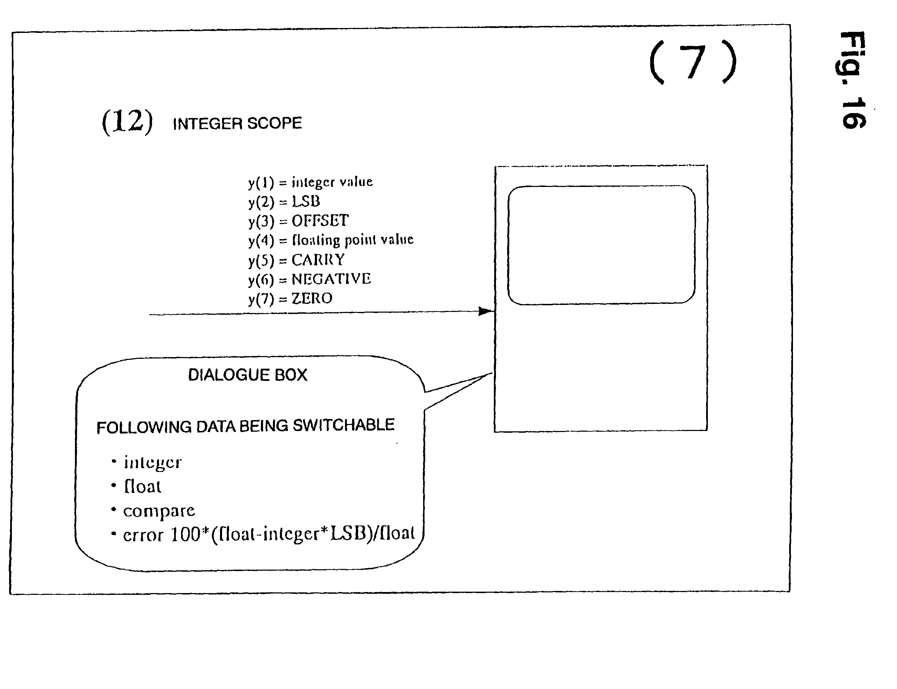

Note that, although multiplication is used as an example in the above to describe a function of an integer block, similar function can be set to other operations. Figs. 10 to 16 show various integer blocks which support integer logic. Although information y(5) to y(8) are added to an integer block in this tool, as shown in Fig. 10, basic information y(1) to y(4) is the same as described above. Also, LSB in Figs. 10 to 16 corresponds to "slope".

As described above, in this embodiment, as a result of introduction of an integer block, a control specification in the form of a chart expresses an integer logic.

As suitable integer conversion condition can be set through comparison between theoretical control logic (real number operation) and integer logic (integer operation), suitable integer logic including fewer bugs can be easily made. The complete control specification itself is usable for a computer simulation. In addition, vehicle-use C code can be automatically generated by extracting an integer logic part from the specification. As the control specification and vehicle-use C code have parts in common, bug generation is reduced at a code generation stage, and program verification, such as debugging, can be easily applied.

Priority Function (Regulation of Operation Order)

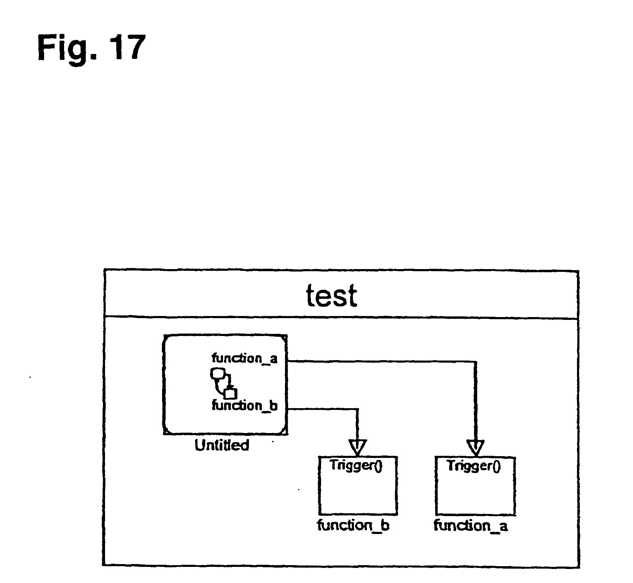

For determination of an order to execute a plurality of modules or operational expressions, generally, each module or operation expression is made into a triggered subsystem and given a function call from a state flowchart, as shown in Fig. 17.

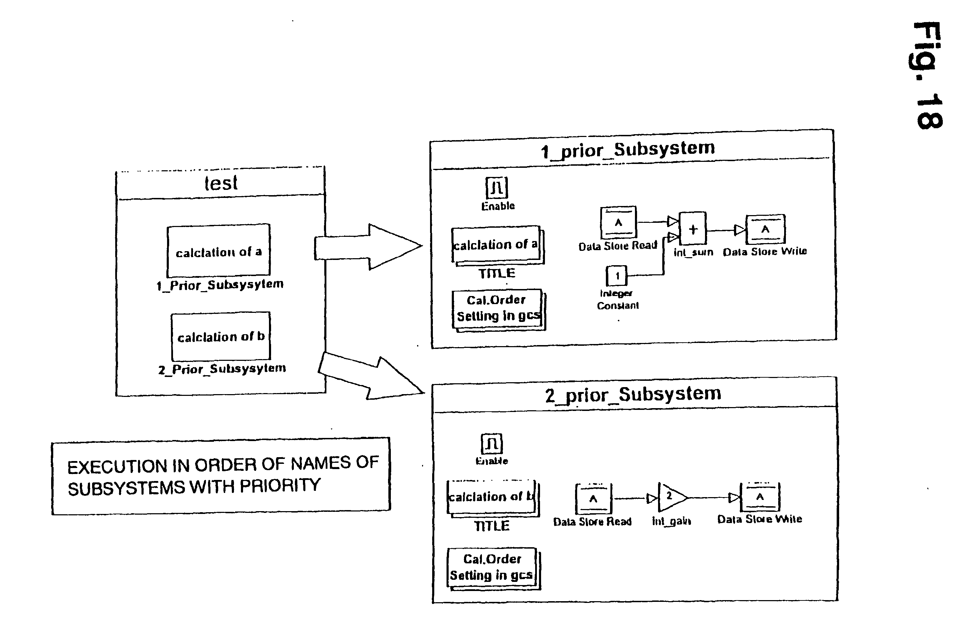

In this embodiment, a priority function is additionally provided, as shown in Fig.18. Specifically, the user imparts a number indicative of a priority order to the data flowchart, whereby each module or operation expression is made as a prioritized subsystem (1_Prior_Subsystem, 2_Prior_Subsystem). Operations are executed in the order of names of the subsystems.

The priority function leads to an advantage that an order to execute operations in data flowcharts in the same hierarchy can be easily determined. In addition, another advantage can be achieved that a C cod which is easier than conventional one can be generated. This is preferable in view of readability and a memory capacity.

C Code Generation (Labeling)

C code generation is applied in response to a user's instruction. As described above, as a result of application of an integer block, each block in a data flowchart has integer information. Therefore, a series of block groups can be processed using integer operations. By generating integer operations, vehicle-use C code having an integer logic are generated. Specifically, referring to the example in Fig. 7, integer operations (two integer inputs and one integer output) are extracted, at a chart level, from information groups to be input or output with respect to a multiplication block.

In order to modify an extent software product for the above use, a tool for automatically producing a general C code based on a chart and a modeling tool into which a C code is written are prepared, and the model is modified so as to suit to the integer logic. Then, processing which is absent from a general C code and unique to a dedicated command, and a dedicated command resulting from a modified general C code are also applied.

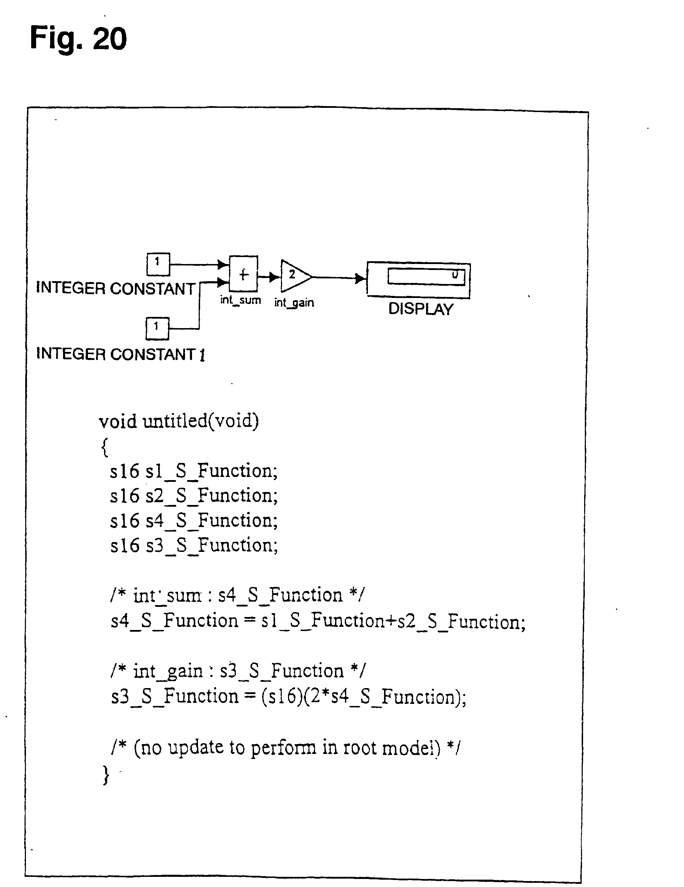

Fig. 20 shows an example of a C code generated from a data flowchart. According to a general C code generation method, computer-determined variable names are given to the respective parts, as shown in the drawing. This results in a difficult to read C code unfriendly to human users.

That is, readability is not fully taken into consideration in a general C code automatic generation method, which is mainly concerned with coincidence between a C code and a chart. Nevertheless, often a program developer must read a C code in testing using an actual ECU, which is conducted for motion verification in vehicle system development. Therefore, user friendliness is desired in automatic vehicle-use C code generation.

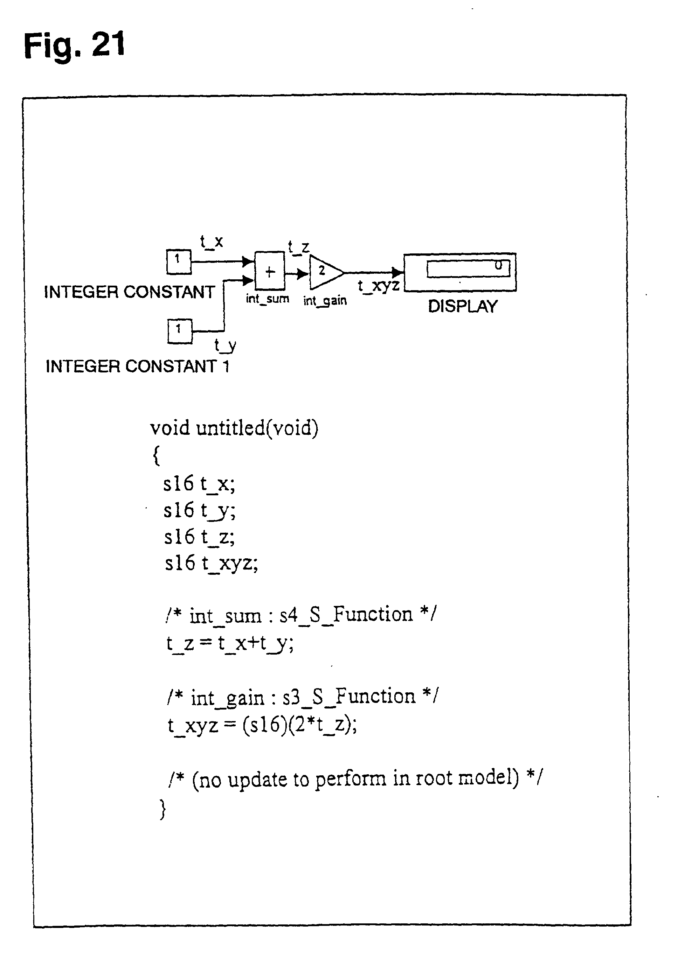

In this embodiment, a labeling function, as shown in Fig. 21, is employed to improve readability. A user clicks a connection line in a block symbol in the data flowchart, in response to which a desired label is attached to the selected connection line. In Fig. 21, as an example, labels "t_x", "t _y", "t_z", "t_xyz" are attached. In actuality, more easily understandable labels, such as a module name, a sensor name, and so on, are preferably attached. In C code generation, the label may be used as a variable name of the part with that label attached. As a result, easily readable C codes are generated, as shown in Fig. 21.

Note that labels may be attached to only a desired line, rather than to all connection lines, as shown in Fig. 21, as the former may help easy reading of C codes. As for a line without labeling, a computer-determined variable names may be used intact.

Grouping in C Code Generation

(1) In general C code generation, a different variable name is given to each block in a data flowchart, and an expression for introducing one variable is generated corresponding to each block. Therefore, resulting C code contains numerous variables and expressions, making it long and less readable.

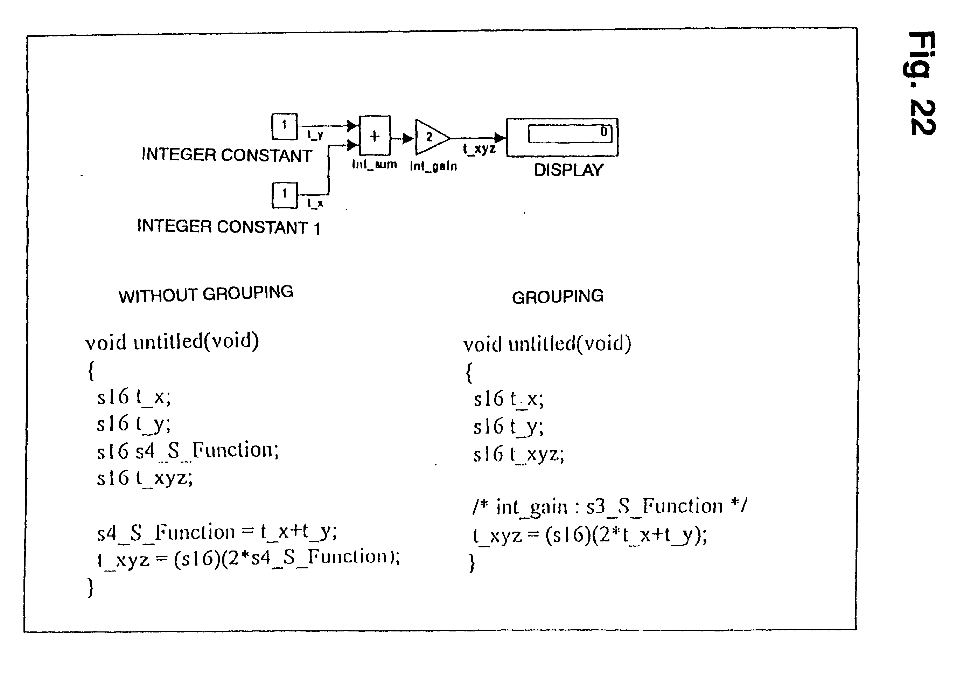

In order to address this problem, in this embodiment, a grouping function is employed to improve readability. In Fig. 22, there are two blocks intervening between input and output. With C code on the left side without grouping, two expressions are generated according to the number of blocks. With C code on the right side with grouping, operations for two blocks are integrated into a single expression, in which variable names unnecessary for a user reading a C code are deleted, and easily readable C code is thereby generated.

Here, grouping of too large a number of blocks may result in a lengthy expression with poor readability. To address this problem, a condition for defining the number of blocks contained in one group is preferably determined. In this example, the maximum number of such blocks is set at two. That is, for one expression of a C code, operations will be carried out twice at maximum.

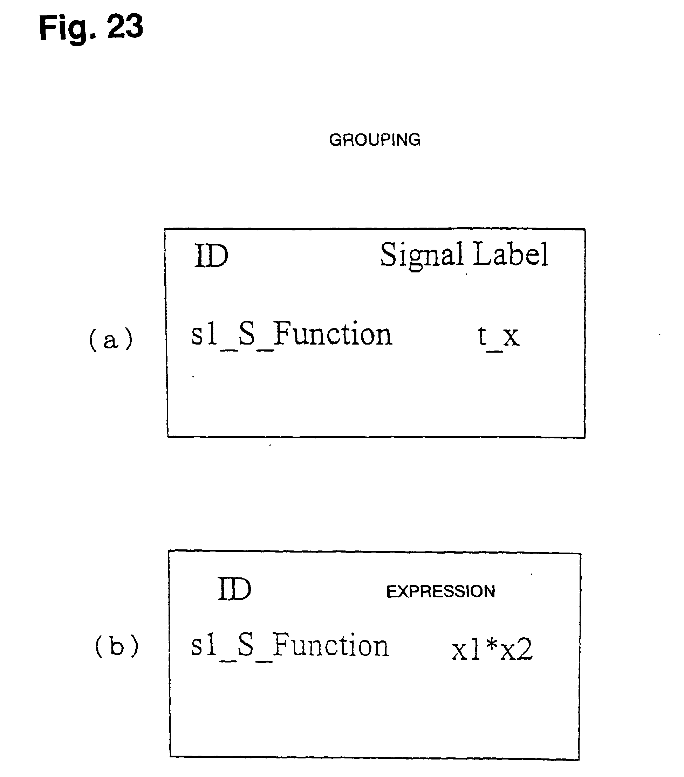

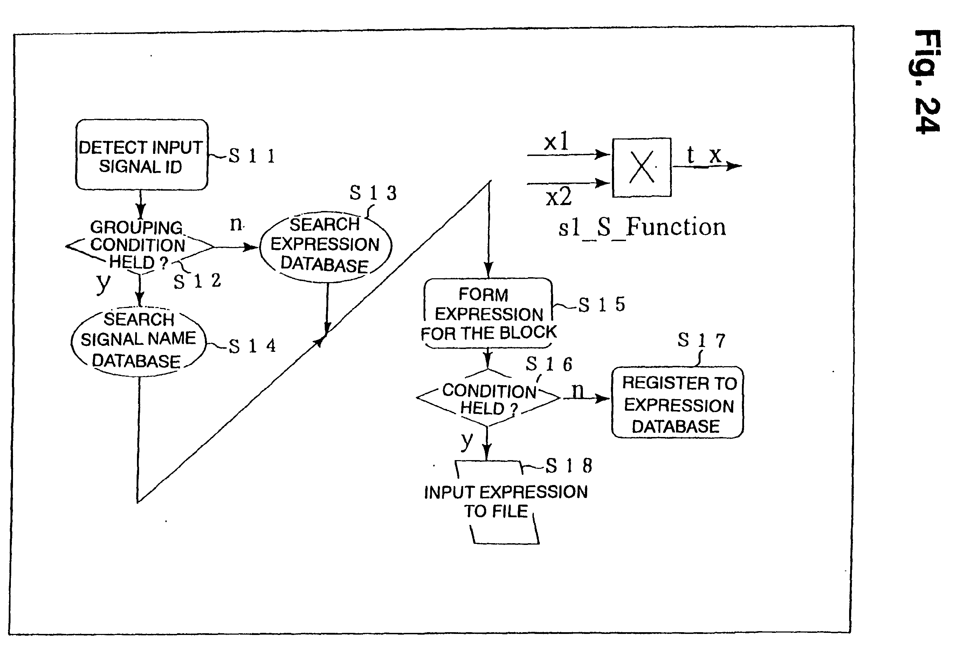

Grouping process will next be described with reference to Figs. 23 and 24. In C code generation, ID is attached to each block in a data flowchart for use as a variable name. Then, a variable name (signal name) database is made for correlating ID and a user-designated label (Fig. 23 (a)). When no corresponding label can be found, ID is used intact.

In Fig. 24, ID of an input signal to a focused block is detected, using a function to detect an input signal (S11). Then, whether or not grouping condition (twice at maximum) is held with each input signal is determined with reference to an expression database (Fig. 23 (b)) (S12) and when the result is negative (less than twice), the expression database is searched (S13) to adopt an expression corresponding to an input ID. On the other hand, when it is determined that the condition is held, a variable name database is then searched (S14) to employ a corresponding label as a variable name. When no attached label is detected, an ID is used.

Using an expression employed at S13 or a variable name employed at S14, an expression for the focused block is generated (S15). Whether or not a grouping condition is held with respect to the generated expression is detected (S16). When it is not, the expression generated at S15 is registered to the expression database for preparation for the process in the next block (S17). On the other hand, when the condition is held, the expression generated at S15 is written into a file (S18). In Fig. 22, an expression for two blocks combined is output.

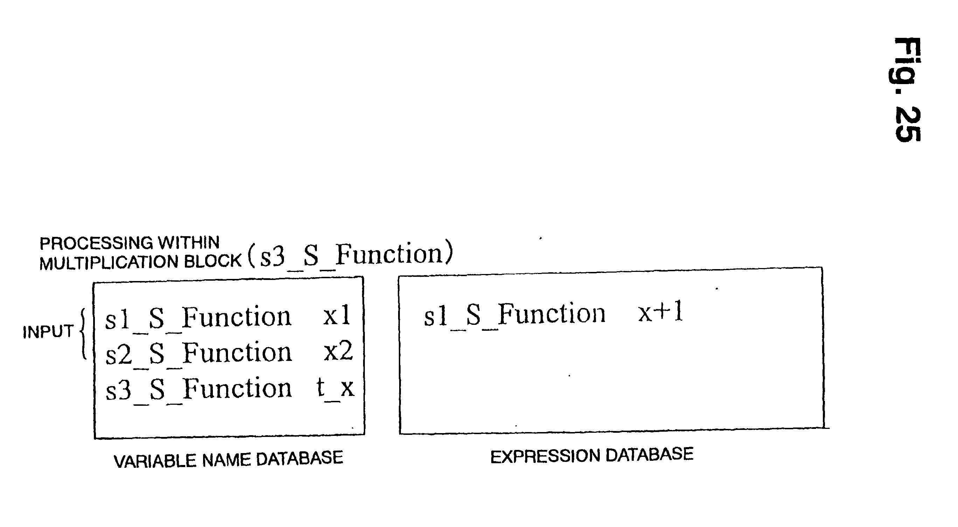

With reference to Fig. 25, a specific example of the above grouping processing will be described

With input signals S1, S2, an expression database is searched with respect to an input signal S1 to obtain an expression (x+1). As the number of grouping for this expression is only once (i.e., the above mentioned condition is held), the expression (x+1) is used as an input signal. Then, a search is carried out with respect to an input signal S2. As the number of grouping for an input signal S2 is twice, a variable name database is then searched to adopt label x2 as an input signal. Therefore, an operation within the focused block will be "(x+1)*x2" (multiplication).

Next, an output signal t_x is retrieved from the variable name database. As two groupings have been conducted with respect to the input signal S1, the grouping condition is held. Then, t_x=(x+1)*x2 is output. If grouping condition is still to be held at this stage, the generated expression is registered in the database.

(2) In grouping processing, a part in a chart, where a label is attached is always determined as a grouping break. All labels attached by the user are contained in an operation expression for a C code. When labels attached to an appropriate part are assigned from a chart prepared by a human user, C code having a structure corresponding to that of the chart is generated. With this processing, more easily readable C code is automatically generated.

In an example wherein a user attaches a label to the beginning and end of a data flowchart, very readable C code is automatically generated, which has definite variables at the beginning and end thereof and process segments in appropriate intervals.

As described above, according to this embodiment, when grouping is applied in C code generation, readability of an automatically generated C code can be improved, and memory can be conserved through reduction of variable names.

Download to Vehicle ECU

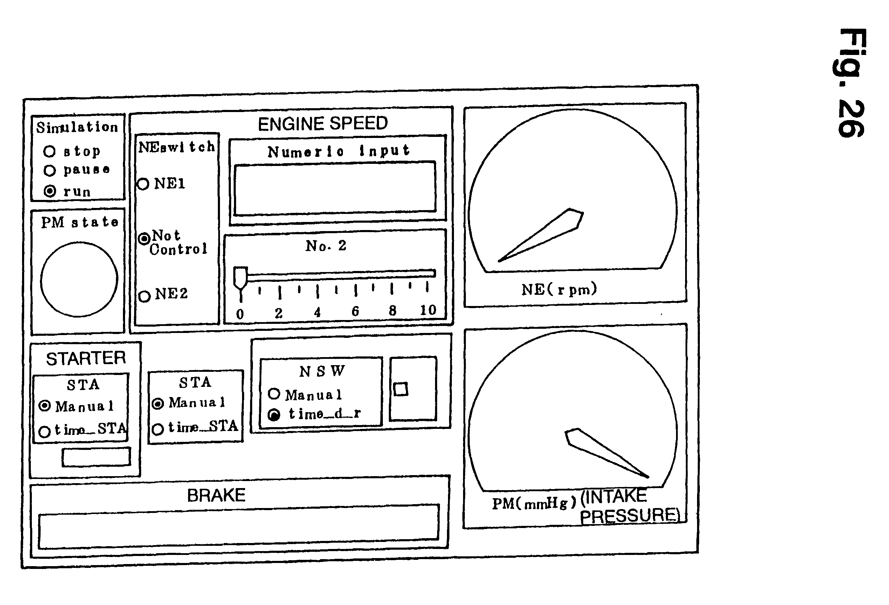

As described above with reference to Fig. 1, the program generator 1 downloads an automatically generated vehicle-use C codes to the vehicle ECU 2 in response to a user's instruction. The vehicle ECU 2 then executes the downloaded vehicle-use C code to control the vehicle model device 3 (DSP). The program generator 1, monitoring the control being executed, displays the execution state in an appropriate format on the display. Fig. 26 shows an example of a monitor screen when the vehicle ECU 2 is an engine ECU. The user operates the program generator to conduct motion verification and a debug operation with respect to a vehicle-use C code.

In this embodiment, a suitable vehicle-use C code having few bugs is generated. The vehicle-use C code is in common with the original control logic. The vehicle-use C code has higher readability. Therefore, a debug operation can be easily and efficiently performed.

As described above, according to the present invention, as a vehicle-use code corresponding to the control specification input by the user is automatically generated, the number of coding operation steps can be significantly reduced. The input control specification itself is usable for computer simulation, as well as usable in a vehicle-ECU after conversion into a vehicle-use code. This enables significant reduction of the number of debug operation steps . As a result, the number of steps necessary to ensure reliability can be reduced, as well as a development period and costs. The advantage of the present invention for assisting a process from preparation of a specification to logic debugging, is remarkable particularly in a situation with overgrown and complicated vehicle control programs.

Also, according to the present invention, a highly readable vehicle-use code can be automatically generated. As a result, the number of steps for a debug operation and so on can be further reduced.

INDUSTRIAL APPLICABILITY

As described above, a method and apparatus for assisting development of a vehicle-use program according to the present invention can be utilized in development of a vehicle control program to be executed by a vehicle ECU.

**Claims**

1. A method for assisting development of a program for a vehicle, comprising:

   a program generation step of generating a vehicle control program using a program generator having a function for generating a segment of vehicle-use code based on a control specification input;
   a downloading step of downloading the generated vehicle control program to a vehicle ECU; and
   a debug step of debugging the vehicle control program by causing the vehicle ECU to execute the vehicle control program.

2. A method for assisting development of a program for a vehicle according to claim 1, wherein
   debugging at the debug step is carried out in the program generator which inspects a result of execution of the vehicle control program by the vehicle ECU.

3. A method for assisting development of a program for a vehicle according to claim 2, further comprising:

   a control execution step of connecting the vehicle ECU to a vehicle model device which models a vehicle to be controlled, to cause the vehicle ECU to control the vehicle model device; and
   an inspecting step of inspecting the vehicle ECU and the vehicle model device while control is applied.

4. A method for assisting development of a program for a vehicle according to claim 3, further comprising:

   a model generation step of generating a vehicle model in the program generator based on a vehicle specification input; and
   a model download step of downloading the vehicle model generated at the model generation step to the vehicle model device.

5. A method for assisting development of a program for a vehicle according to any one of claims 1 to 4, wherein the segment of vehicle-use code is a segment of general code modified to suit an integer logic to be processed in the vehicle ECU.

6. A method for assisting development of a program for a vehicle according to claim 5, wherein a vehicle control program is generated at the program generation step, so as to accord to an integer conversion condition input into the program generator.

7. A device for assisting development of a program for a vehicle, comprising:

   input means for inputting a vehicle control specification;
   program generation means for generating a segment of vehicle-use code for a vehicle control program based on the control specification;
   download means for downloading the vehicle control program to an external vehicle ECU; and
   output means for outputting a result of execution of the vehicle control program by the vehicle ECU.

8. A device for assisting development of a program for a vehicle, comprising:

   a chart generation function for generating a data flowchart and a state flowchart indicative of a vehicle control specification; and
   a program code generation function for generating, based on the charts generated, a segment of vehicle-use code for a vehicle control program having an integer logic to be processed by a vehicle ECU.

9. A device for assisting development of a program for a vehicle according to claim 8, further comprising:
   a simulation function for simulating the data flowchart with application of a floating point number corresponding to a physical value and of an integer obtained by converting a floating point number, to output results of simulations with floating point number applied thereto and of the integer applied thereto, respectively.

10. A device for assisting development of a program for a vehicle according to claim 9, wherein a result of back calculation to obtain a floating point number from a result of simulation with an integer applied thereto is displayed so that a difference between results of simulations with the floating point number applied thereto and of the integer applied thereto, respectively, can be determined.

11. A device for assisting development of a program for a vehicle according to claim 10, wherein the data flowchart has a block symbol which includes information concerning a floating point number, an integer, an integer conversion condition from a floating point number to an integer, and a result of back calculation to obtain an integer from a floating point number using the integer conversion condition.

12. A device for assisting development of a program for a vehicle according to claim 11, wherein the integer conversion condition is able to be adjusted based on a result of the simulation.

13. A device for assisting development of a program for a vehicle according to any one of claims 8 to 12, further comprising
a priority function for defining an order for executing a plurality of data flowcharts in a same hierarchy in the sate flowchart.

14. A device for assisting development of a program for a vehicle according to any one of claims 8 to 13, further comprising

a labeling function for assigning a desired label to a symbol connection line desirably selected in the data flowchart,
wherein
a vehicle-use code using the label as a variable name of a part with the label attached is generated.

15. A device for assisting development of a program for a vehicle according to any one of claims 8 to 14, further comprising
a grouping function for grouping a plurality of processes corresponding to a plurality of block symbols in the data flowchart when the vehicle-use code is generated.

16. A device for assisting development of a program for a vehicle according to claim 15, wherein grouping is applied according to a predetermined grouping restriction condition which defines a number of block symbols to be grouped.

17. A device for assisting development of a program for a vehicle according to claim 15 or 16, further comprising

a labeling function for assigning a desired label to a symbol connection line desirably selected in the data flowchart,
wherein
a part with the label attached thereto is set as a grouping segment.

18. A device for assisting development of a program for a vehicle according to any one of claims 8 to 17, wherein a segment of vehicle-use C code is generated by modifying, using the program code generation function, a segment of general C code to suit a vehicle ECU.

19. A computer readable memory medium for use in assisting development of a program for a vehicle, bearing a program causing a computer to execute

a chart generation function for generating a data flowchart and a state flowchart indicative of a vehicle control specification, and
a program code generation function for generating, based on the generated chart, a segment of vehicle-use code for a vehicle control program having an integer logic to be processed by a vehicle ECU.

# Fig. 1

EP 1 111 483 A1

# Fig. 2

Fig. 3

EP 1 111 483 A1

(a)

in1 → trans1 —

in2 → trans2 —

+ +

func → out

(b)

init/

int/

[i==0]

EFI/

ESA/

term/

[j>0]{j 0;}

[j<n]{j++;sub_func();}

12

Fig. 4

EP 1 111 483 A1

FUNCTIONS TO BE SUPPLIED

$$P = int((p-op)/lp) \qquad p = transfer\_p\ (P)$$

$$Q = int((q-oq)/lq) \qquad q = transfer\_q\ (A)$$

LARGE CAPITALS FOR INTEGER VARIABLES

p

2 1〜 SENSOR

v

2 2〜 A/D

P

FIXED FLOATING POINT NUMBER CODE

$$Q = logic(P)$$

$$A = table^{-1}(Q)$$

2〜

q

2 3

ACTUATOR

A

CONTROLLER

# Fig. 5

$$y(k) = 0.7888\ y(k\text{-}1) +$$
$$0.1784\ y(k\text{-}2) -$$
$$0.1000\ y(k\text{-}3) -$$
$$0.0010\ u(k)\quad +$$
$$0.0150\ u(k\text{-}1) -$$
$$0.0040\ u(k\text{-}2) -$$
$$0.0020\ u(k\text{-}3)$$

EXAMPLE OF AN EXPRESSION INCLUDING
A FLOATING POINT NUMBER

# Fig. 6

CONVERSION EXPRESSION
FLOATING POINT NUMBER → INTEGER

$$x\_int = (x\_float - OFFSET)/SLOPE$$

SLOPE, OFFSETS TO BE
CALCULATED WITHIN INTEGER BLOCK

integer

SLOPE (LSB)

OFFSET (bias)

float

Data Type

integer*SLOPE + OFFSET

INTEGER BLOCK

# Fig. 7

**Fig. 8**

EP 1 111 483 A1

( 1 )

MULTIPLICATION

INPUT 1

INPUT 2

$$\frac{(x - offset1)}{slope1} \times \frac{(y - offset2)}{slope2}$$

OUTPUT

$$= \frac{xy - offset1*y - x*offset2 + offset1*offset2}{slope1*slope2}$$

OUTPUT SLOPE : slope1*slope2
OUTPUT OFFSET : offset1*y + x*offset2 - offset1*offset2

Fig. 9

EP 1 111 483 A1

$$( 2 )$$

MULTIPLICATION

INPUT 1

INPUT 2

OUTPUT

$$\underbrace{\left( \dfrac{(x - offset1)}{slope1} + \dfrac{offest1}{slope1} \right)}_{X_{int}} \times \underbrace{\left( \dfrac{(y - offset2)}{slope2} + \dfrac{offset2}{slope2} \right)}_{Y_{int}} = \dfrac{xy}{slope1 * slope2}$$

DESIGNATED $SLOPE$ : slope_o → OUTPUT

DESIGNATED $OFFSET$ : offset_o → OUTPUT

$OFF1_{int}$ : offset1/slope1, $OFF2_{int}$ : offset2/slope2

MULTIPLIED INTEGER VALUE :

$$((X_{int} + OFF1_{int}) * (Y_{int} + OFF2_{int}) * slope1 * slope2 - offset\_o) / slope\_o$$

Fig. 10

(1)

( 1 ) ALL INTEGER LINES ARE VECTORS CONSTITUTING OF THE BELOW

$y(1)$ = integer value          $y(5)$ = signed or unsigned
$y(2)$ = LSB                    $y(6)$ = CARRY
$y(3)$ = OFFSET                 $y(7)$ = ZERO
$y(4)$ = floating point value   $y(8)$ = NEGATIVE

( 2 ) INTEGER LOGIC SUPPORT TOOL HAS BLOCKS BELOW

(1) CONVERSION TO INTEGER          (9) 2D TABLE LOOK UP
(2) CONVERSION TO FLOATING         (10) SPLIT
(3) ADDITION    POINT NUMBER       (11) UNIT DELAY
(4) MULTIPLICATION                 (12) INTEGER SCOPE
(5) DIVISION
(6) SURPLUS
(7) SHIFT
(8) 1D TABLE LOOK UP

EP 1 111 483 A1

Fig. 11

EP 1 111 483 A1

( 2 )

**(1) CONVERSION TO INTEGER**

DIALOGUE BOX INPUT
(1) bit length
(2) signed or unsigned
(3) LSB
(4) OFFSET

y(1) = integer value
y(2) = LSB
y(3) = OFFSET
y(4) = floating point value
y(5) = signed or unsigned
y(6) = CARRY
y(7) = ZERO
y(8) = NEGATIVE

in_1        To Integer        out_1

DIALOGUE BOX DISPLAY
(1) minimum value
(2) maximum value

**(2) CONVERSION TO FLOATING POINT NUMBER**

in_1        To float        out_1

# Fig. 12

$(3)$

**(3) ADDITION**

DIALOGUE BOX
bit length
signed unsigned

$y(1) = u(1) + u(2)$
$y(2) = if(LSB1 == LSB2) LSB1$
Inf
$y(3) = OFFSET1 + OFFSET2$

Int_Sum

in_1

in_2

out_1

$u(1) = integer value$
$u(2) = LSB2$
$u(3) = OFFSET1$

**(4) MULTIPLICATION**

DIALOGUE BOX
bit length
signed unsigned

$y(1) = u(1) * u(2)$
$y(2) = LSB1 * LSB2$
$y(3) = LSB1 * OFFSET2 +$
$LSB2 * OFFSET1 +$
$OFFSET1 * OFFSET2$

Int_Mul

in_1

in_2

out_1

$u(1) = integer value$
$u(2) = LSB2$
$u(3) = OFFSET2$

# Fig. 13

$( 4 )$

**(5)** DIVISION

$u(1) = \text{integer value}$
$u(2) = LSB2$
$u(3) = OFFSET1$

$y(1) = u(1)/u(2)$
$y(2) = LSB1/LSB2$
$y(3) = OFFSET1/(LSB1 * u(2))$
$OFFSET2/(LSB2 * u(2))$

in_1  in_2  Int_Div  out_1

**(6)** SURPLUS

$u(1) = \text{integer value}$
$u(2) = LSB2$
$u(3) = OFFSET1$

$y(1) = u(1)\%u(2)$
$y(2) = LSB1$
$y(3) = OFFSET1/u(2)$

in_1  in_2  residual  out_1

# Fig. 14

$(5)$

(7) SHIFT

DIALOGUE BOX INPUT
(1) shift bit
(2) >> or <<

$y(1)$ = integer value
$y(2)$ = LSB
$y(3)$ = OFFSET*$2^n$

in_1  shift  out_1

(8) (9) TABLE

DIALOGUE BOX
$x$ = datax   bit length
$y$ = datay   signed or unsigned
$z$ = dataz   LSBz
                OFFSETz

$u(1)$ = integer value
$u(2)$ = LSB2
$u(3)$ = OFFSET2

$y(1)$ = z
$y(2)$ = LSBz
$y(3)$ = OFFSETz

in_1  in_2  Two_D_table  out_1

Fig. 15

EP 1 111 483 A1

( 6 )

(10)  SPLIT

32bit
u(1) = integer value
u(2) = LSB
u(3) = OFFSET

DIALOGUE BOX INPUT
(1) upper or lower

y(1) = upper16 bit  data
or
lower 16 bit data
y(2) = LSB*256*256 or
or
LSB
y(3) = OFFSET

in_1

bit_length

out_1

(11)  UNIT DELAY

u(1) = integer value
u(2) = LSB
u(3) = OFFSET

y(1) = u(k-1)
y(2) - LSB
y(3) = OFFSET

in_1

shift

out_1

# Fig. 16

(7)

(12) INTEGER SCOPE

y(1) = integer value
y(2) = LSB
y(3) = OFFSET
y(4) = floating point value
y(5) = CARRY
y(6) = NEGATIVE
y(7) = ZERO

DIALOGUE BOX

FOLLOWING DATA BEING SWITCHABLE

- integer
- float
- compare
- error 100*(float-integer*LSB)/float

# Fig. 17

# Fig. 18

EP 1 111 483 A1

# Fig. 19

**PRESENT INVENTION**

test.c

```
void test (void)
{
    A = A + 1;
    A = 2 * A;
}
```

**CONVENTIONAL**

```
void untitled (void)
{
    function_a();
    function_b();
}
```

test.c

```
void function_a (void)
{
    A = A + 1;
}
void function_b (void)
{
    A = 2 * A;
}
```

28

# Fig. 20

INTEGER CONSTANT

int_sum   int_gain

DISPLAY

INTEGER CONSTANT 1

```
void untitled(void)
{
 s16 s1_S_Function;
 s16 s2_S_Function;
 s16 s4_S_Function;
 s16 s3_S_Function;

 /* int sum : s4_S_Function */
 s4_S_Function = s1_S_Function+s2_S_Function;

 /* int_gain : s3_S_Function */
 s3_S_Function = (s16)(2*s4_S_Function);

 /* (no update to perform in root model) */
}
```

# Fig. 21

t_x

INTEGER CONSTANT

t_z

int_sum   int_gain

t_xyz

DISPLAY

INTEGER CONSTANT 1

t_y

```
void untitled(void)
{
  s16 t_x;
  s16 t_y;
  s16 t_z;
  s16 t_xyz;

  /* int_sum : s4_S_Function */
  t_z = t_x+t_y;

  /* int_gain : s3_S_Function */
  t_xyz = (s16)(2*t_z);

  /* (no update to perform in root model) */
}
```

Fig. 22

EP 1 111 483 A1

INTEGER CONSTANT

t_y

+

Int_sum

2

int_gain

t_xyz

0

DISPLAY

INTEGER CONSTANT 1

t_x

WITHOUT GROUPING

```
void untitled(void)
{
 s16 t_x;
 s16 t_y;
 s16 s4_S_Function;
 s16 t_xyz;

 s4_S_Function = t_x+t_y;
 t_xyz = (s16)(2*s4_S_Function);
}
```

GROUPING

```
void untitled(void)
{
 s16 t_x;
 s16 t_y;
 s16 t_xyz;

 /* int_gain : s3_S_Function */
 t_xyz = (s16)(2*t_x+t_y);
}
```

# Fig. 23

GROUPING

(a)

| ID | Signal Label |
|---|---|
| s1_S_Function | t_x |

(b)

| ID | EXPRESSION |
|---|---|
| s1_S_Function | x1*x2 |

Fig. 24

EP 1 111 483 A1

DETECT INPUT SIGNAL ID — S 1 1

GROUPING CONDITION HELD ? — S 1 2

n → SEARCH EXPRESSION DATABASE — S 1 3

y

SEARCH SIGNAL NAME DATABASE — S 1 4

x1 →

x2 → [X] → t_x

s1_S_Function

FORM EXPRESSION FOR THE BLOCK — S 1 5

CONDITION HELD ? — S 1 6

n → REGISTER TO EXPRESSION DATABASE — S 1 7

y

INPUT EXPRESSION TO FILE — S 1 8

# Fig. 25

PROCESSING WITHIN
MULTIPLICATION BLOCK ( s3_S_Function )

INPUT
{
s1_S_Function  x1
s2_S_Function  x2
s3_S_Function  t_x

VARIABLE NAME DATABASE

s1_S_Function  x+1

EXPRESSION DATABASE

# Fig. 26

NE ( r pm )

PM ( mmHg ) (INTAKE PRESSURE)

ENGINE SPEED

Numeric Input

No. 2

0 2 4 6 8 10

NEswitch
○ NE1
◉ Not Control
○ NE2

Simulation
○ stop
○ pause
◉ run

PM state

N S W
○ Manual
◉ time_d_r

STA
◉ Manual
○ time_STA

STARTER
STA
◉ Manual
○ time_STA

BRAKE

EP 1 111 483 A1

## INTERNATIONAL SEARCH REPORT

International application No.

PCT/JP99/03146

### A. CLASSIFICATION OF SUBJECT MATTER
Int.Cl$^6$ G05B19/02

According to International Patent Classification (IPC) or to both national classification and IPC

### B. FIELDS SEARCHED

Minimum documentation searched (classification system followed by classification symbols)
Int.Cl$^6$ G05B19/00-19/05

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP, 7-93137, A (Hitachi,Ltd.),<br>7 April, 1995 (07. 04. 95) (Family: none) | 1-2, 5-8,<br>18-19 |
| Y | JP, 1-319880, A (NEC Corp.),<br>26 December, 1989 (26. 12. 89) (Family: none) | 1-2, 5-8,<br>18-19 |

☐ Further documents are listed in the continuation of Box C.   ☐ See patent family annex.

| | |
|---|---|
| *     Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 14 July, 1999 (14. 07. 99) | 27 July, 1999 (27. 07. 99) |

| Name and mailing address of the ISA/<br>Japanese Patent Office | Authorized officer |
|---|---|
| Facsimile No. | Telephone No. |

Form PCT/ISA/210 (second sheet) (July 1992)

36